# EUROPÄISCHE PATENTSCHRIFT

(11) **EP 1 140 384 B1**
(45) Veröffentlichungstag und Bekanntmachung des Hinweises auf die Patenterteilung: **26.11.2003**
(21) Anmeldenummer: 00958089.5
(22) Anmeldetag: 19.09.2000
(51) Int. Cl.: B21C 37/12

(54) **VORRICHTUNG UND VERFAHREN ZUM KONTINUIERLICHEN HERSTELLEN EINES VERBUNDROHRES**
DEVICE AND METHOD FOR CONTINUOUSLY PRODUCING A COMPOSITE TUBE
PROCEDE ET DISPOSITIF POUR PRODUIRE UN TUBE D'ASSEMBLAGE EN CONTINU

(30) Priorität: 08.11.1999 CH 204299
(43) Veröffentlichungstag der Anmeldung: 10.10.2001
(73) Patentinhaber: GEBERIT TECHNIK AG, 8645 Jona (CH)
(72) Erfinder: BREGENZER, René, CH-8632 Tann (CH)
(74) Vertreter: Groner, Manfred
(86) Internationale Anmeldenummer: CH0000508
(87) Internationale Veröffentlichungsnummer: WO01043894

(56) Entgegenhaltungen:
- FR-A- 1 331 028
- GB-A- 714 105
- US-A- 3 686 744
- US-A- 3 707 170
- US-A- 4 724 027
- PATENT ABSTRACTS OF JAPAN vol. 016, no. 480 (M-1321), 6. Oktober 1992 (1992-10-06) & JP 04 175138 A (SEKISUI CHEM CO LTD), 23. Juni 1992 (1992-06-23)

## Beschreibung

Die Erfindung betrifft eine Vorrichtung zum kontinuierlichen Herstellen eines Verbundrohres gemäss Oberbegriff des Anspruchs 1. Die Erfindung betrifft zudem ein Verfahren zum kontinuierlichen Herstellen eines Verbundrohres.

Eine Vorrichtung der genannten Gattung ist im Stand der Technik aus der EP 0 154 931 B1 bekannt geworden. Mit einer solchen Vorrichtung können Verbundrohre hergestellt werden, die ein Innenrohr als Mittelschicht aus einem Metall insbesondere Aluminium aufweisen und die biegbar sind. Solche Verbundrohre aus Kunststoff/Aluminium/Kunststoff haben sich vor allem in der Haustechnik als Wasserrohre ausserordentlich bewährt.

Bei der Herstellung eines solchen Verbundrohres ist es wesentlich, dass das Kunststoffinnenrohr sich dauerhaft mit dem Metallrohr verbindet. Es ist bekannt, zur Gewährleistung einer hinreichenden Verbindung auf das Kunststoffinnenrohr eine Haftvermittelnde Schicht, beispielsweise ein Kleber aufzubringen.

Aus der EP 0 581 208 A ist eine weitere Vorrichtung dieser Gattung bekannt geworden, bei welcher mittels einer Druckgaszuführung im Innern des sich bildenden Rohres ein Überdruck erzeugt wird. Damit wird versucht, das Kunststoffinnenrohr möglichst fest an das Metallrohr anzudrücken. Um einen Überdruck erzeugen zu können, ist hier ein Dichtstopfen erforderlich, der an einer Extrusionsdüse mittels einer Stange befestigt wird.

Bei dieser Vorrichtung besteht die Schwierigkeit, dass der Anpressdruck schwierig zu kontrollieren ist und dass die Druckgaszuführung aufwendig ist.

Der Erfindung liegt die Aufgabe zugrunde eine Vorrichtung der genannten Gattung zu schaffen, die eine noch zuverlässigere Verbindung des Kunststoffinnenrohres mit dem Metallrohr gewährleistet und die trotzdem einfach und kostengünstig herstellbar ist.

Die Aufgabe ist gemäss Anspruch 1 gelöst. Bei der erfindungsgemässen Vorrichtung kann der Anpressdruck gezielt an den besonders geeigneten Bereichen auf das Kunststoffinnenrohr ausgeübt werden. Mit einem Expansionskörper kann gezielt im Bereich der Formstation ein Anpressdruck erzeugt werden. Der Expansionskörper liegt in einem ringförmigen Bereich innenseitig am Kunststoffinnenrohr an und verhindert durch den radialen Druck nach Aussen den Eintritt von Luft zwischen das Kunststoffinnenrohr und das Metallrohr.

Der Expansionskörper kann so ausgebildet sein, dass seine Reibung wesentlich kleiner ist als diejenige eines Dichtungsstopfens. Die erfindungsgemässe Vorrichtung eignet sich insbesondere zur Herstellung eines Verbundrohres, bei welchem das Kunststoffinnenrohr eine vergleichsweise kleine Wandstärke aufweist. Bei solchen Innenrohren ist die Gefahr einer Faltenbildung beim Erwärmen des Rohres besonders hoch. Mittels eines oder mehreren Expansionskörpern kann zusätzlich an weiteren kritischen Stellen der erforderliche Anpressdruck ausgeübt werden.

Nach einer Weiterbildung der Erfindung ist der Expansionskörper zu seiner Verankerung mit einer rückseitig angeordneten Magnethalterung verbunden. An dieser Magnethalterung können in einfacher Weise mittels eines fadenförmigen Zugmittels ein oder mehrere Expansionskörper verankert werden. Eine solche Magnethalterung ermöglicht in einfacher Weise eine Verschiebung des Expansionskörpers auch während des Arbeitsprozesses. Damit kann die optimale Position des Expansionskörpers ermittelt werden. Eine solche Magnethalterung weist beispielsweise eine Magnetspule auf, welche das zu bildende Rohr aussenseitig umgreift. Mit dieser Magnetspule wird ein ferromagnetischer Körper fixiert, der im Innern des Rohres angeordnet ist. Beim Verschieben der Spule in Achsrichtung des Rohrs wird gleichzeitig dieser Körper und damit auch der Expansionskörper verschoben.

Nach einer Weiterbildung der Erfindung weist der Expansionskörper ein federelastisches Element auf, das einen radialen Druck auf die Innenseite des Kunststoffinnenrohres ausübt. Ein solches federelastisches Element kann beispielsweise gemäss einer Weiterbildung der Erfindung ein trichterförmiger Körper mit einer gummielastischen Wandung sein. Nach einer Variante ist der Expansionskörper ein Druckkörper, beispielsweise ein walzenförmiger Ballon. Wie ersichtlich, kann mit dem Expansionskörper der Anpressbereich und auch die Anpresskraft genau bestimmt und konstant gehalten werden.

Ein geeignetes Verfahren ergibt sich aus dem Verfahrensanspruch 9.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:
- Figur 1: eine schematische Ansicht einer erfindungsgemässen. Vorrichtung,
- Figur 2: ein schematischer Längsschnitt durch die Vorrichtung gemäss Figur 1,
- Figur 3: ein schematischer Teilschnitt durch eine Vorrichtung nach einer Variante,
- Figur 4: eine Teilansicht eines mit der Vorrichtung hergestellten Verbundrohres,
- Figur 5: ein schematischer Teilschnitt durch die Vorrichtung gemäss Figur 2, und
- Figur 6: ein schematischer Teilschnitt durch die Vorrichtung gemäss Figur 3.

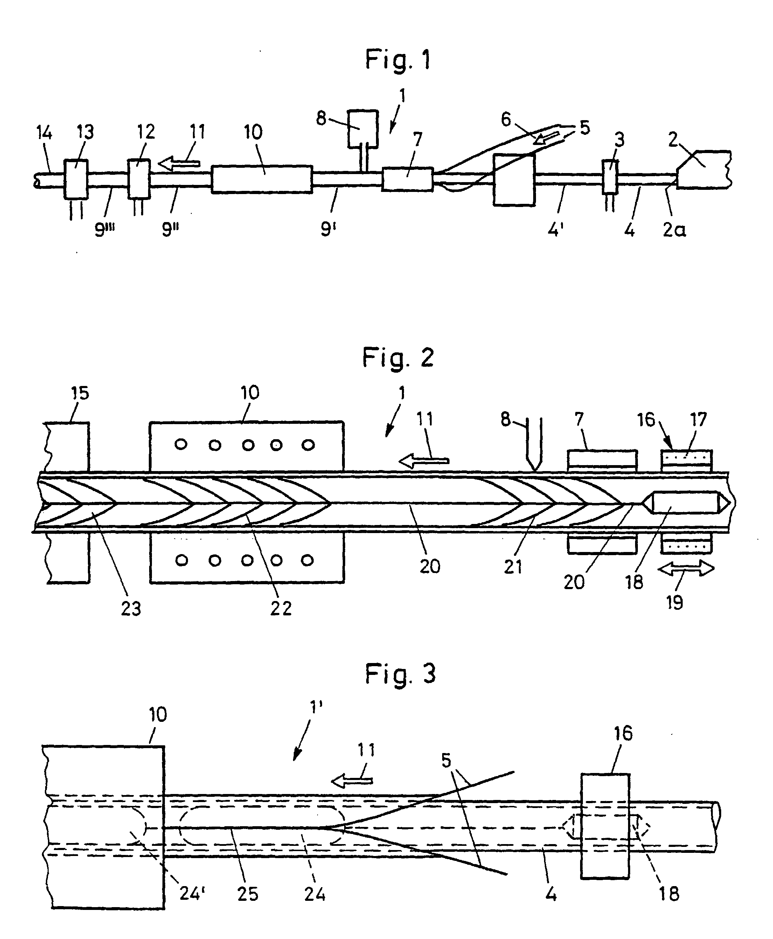

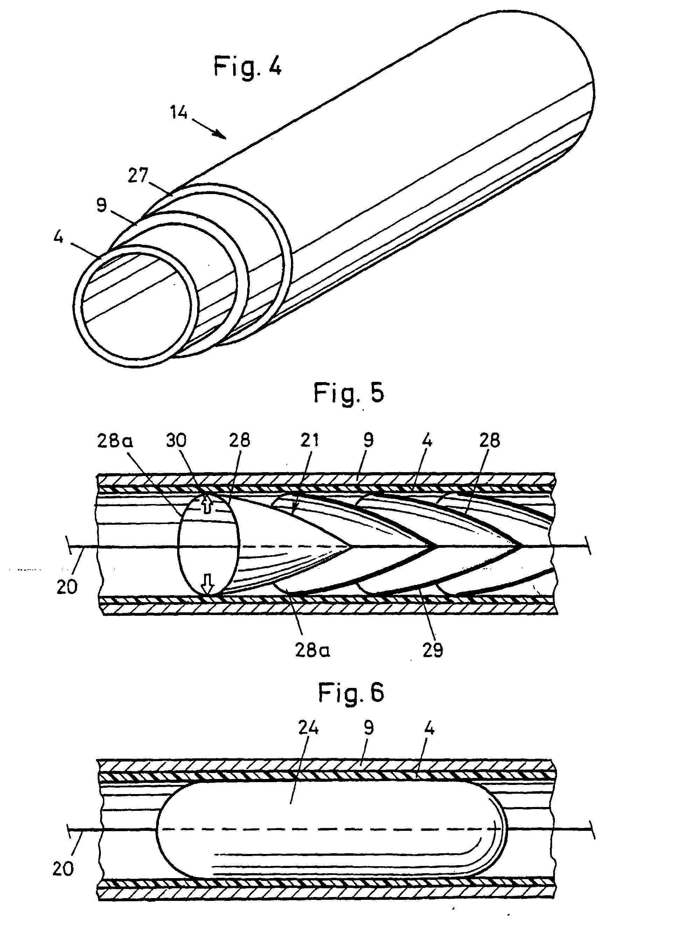

Die in den Figuren 1 und 2 gezeigte Vorrichtung 1 dient zur Herstellung eines Verbundrohres 14 gemäss Figur 4. Dieses Verbundrohr 14 weist ein Innenrohr 9 aus einem Metall, insbesondere Aluminium sowie ein Kunststoffinnenrohr 4 sowie ein Aussenrohr 27 auf. Zwischen dem Rohr 9 und den Rohren 4 und 27 ist eine hier nicht gezeigte Klebeschicht oder eine sonstige Haftvermittlungsschicht angeordnet, welche diese Rohre oder Schichten mit dem Innenrohr 9 verbinden. Das Verbundrohr 14 ist biegbar und beispielsweise ein Wasserrohr.

Die Vorrichtung 1 weist eine Extrusionsvorrichtung 2 auf, mit welcher an einer Extrusionsmündung 2a das Kunststoffinnenrohr 4 gebildet wird. Die Strömungsrichtung den Figuren 1 und 2 von rechts nach links und ist durch den Pfeil 11 angedeutet. Nach der Extrusionsvorrichtung 2 ist eine Beschichtungsstation 3 angeordnet, mit welcher auf die Aussenseite des Kunststoffinnenrohres 4 eine Haftschicht aufgetragen wird oder das Rohr 4 auf eine andere Weise aussenseitig haftbar ausgebildet wird. Nach der Beschichtungsstation 3 ist das Kunststoffinnenrohr 4' somit aussenseitig mit einer haftvermittelnden Schicht versehen.

Im Abstand zur Beschichtungsstation 3 ist eine Magnethalterung 16 angeordnet, die im Aufbau und Funktion weiter unten näher erläutert wird. Es folgt nun eine Formstation 7, mit der aus einem in Richtung des Pfeiles 6 zugeführten Metallband 5 ein Rohr gebildet wird. Die hierbei entstehende Naht wird mit einer nachfolgenden Schweissstation 8 geschlossen. Das die Schweissstation 8 verlassende Rohr 9 besteht somit aus einem aussenseitig haftvermittelten Kunststoffinnenrohr 4' und einem über dieses gelegtes Metallrohr 9.

Damit sich das Kunststoffinnenrohr 4' mit dem Metallrohr 9 verbinden, durchläuft das Rohr 9' eine Erwärmungsstation 10, in welcher das Rohr 9' erwärmt wird. Das die Station 10 verlassende Rohr 9'' wird in einer weiteren Beschichtungsstation 12 aussenseitig mit einer weiteren Haftschicht versehen. Auf das aussenseitig beschichtete Rohr 9''' wird in einer nachfolgenden Extrusionsstation 13 das Aussenrohr 27 aufgebracht. Das die Station 13 verlassende Verbundrohr 14 kann nun aufgerollt und verwendet werden.

Zwischen der Erwärmungsstation 10 und der Beschichtungsstation 12 kann gemäss Figur 2 eine Kühlstation 15 angeordnet sein, in welcher das Rohr 9" beispielsweise in einem Kühlbad auf die zum Auftragen des Haftmittels geeignete Temperatur abgekühlt wird.

Bei der Herstellung des Verbundrohres 14 ist es wesentlich, dass das Innenrohr 4 dauerhaft und ohne Lufteinschlüsse mit dem Metallrohr 9 verbunden wird. Ist das Innenrohr 4 vergleichsweise dünn, so muss dieses zur Verhinderung einer Faltenbildung radial nach außen an das Metallrohr angepresst werden. Hierzu ist ein in Figur 2 gezeigter Expansionskörper 21 vorgesehen, der mittels der Magnethalterung 16 stationär schwimmend gehalten wird. Damit der Expansionskörper 21 infolge der Reibung nicht mit dem sich bildenden Rohr mitgezogen wird, ist der Expansionskörper 21 mittels eines biegbaren Fadens 20 rückseitig mit einem Magneten 18 verbunden, der im Magnetfeld einer Magnetspule 17 angeordnet ist. Die Magnetspule 17 ist so ausgebildet, dass infolge ihrer magnetischen Kraft der Magnet 18 den Expansionskörper 21 und eventuell weitere Expansionskörper 22 und 23 stationär halten kann. Die Magnetspule 17 ist in den Richtungen des Doppelpfeiles 19 verschiebbar. Damit kann der Magnet 18 und auch der Expansionskörper 21 sowie eventuell die weiteren Expansionskörper 22 und 23 stufenlos verschoben werden.

Der Expansionskörper 21 ist etwa im Bereich der Station 7 und der Schweissstation 8 angeordnet. Der weitere Expansionskörper 22 befindet sich im Bereich der Erwärmungsstation 10 und im Fall einer Kühlstation 15 kann hier ein weiterer Expansionskörper 23 angeordnet sein. Die Expansionskörper 21-23 bestehen gemäss Figur 5 jeweils aus mehreren hintereinander angeordneten Expansionselementen 28, die trichterförmig ausgebildet sind und mit einem umlaufenden Rand 28a jeweils in einem ringförmigen Bereich das Kunststoffinnenrohr 4 an das Metallrohr 9 anpressen. Die Pfeile 30 veranschaulichen diesen radialen Anpressdruck. Die Expansionselemente 28 bestehen beispielsweise aus einem gummielastischen Körper mit einer entsprechenden Wandung 29. Diese Expansionskörper 28 sind jeweils mit dem fadenförmigen Zugorgan 20 verbunden.

Die Figuren 3 und 6 zeigen einen Expansionskörper 24 gemäss einer Variante. Dieser Expansionskörper 24 ist ein walzenförmiger Körper und besteht aus einem gummielastischen Material. Er kann jedoch auch als Ballon ausgebildet sein. Der Innendruck des Ballons ist hierbei so gewählt, dass ein geeigneter Anpressdruck erzeugt wird. Die Länge des Expansionskörpers 24 ist so gewählt, dass das Innenrohr 4 im gewünschten Bereich angepresst wird. Es können auch mehrere solche Expansionskörper 24 in einer Reihe nacheinander angeordnet sein. Hierbei kann die Länge dieser Expansionskörper 24 gleich oder unterschiedlich sein. Ebenfalls kann der Anpressdruck gleich oder unterschiedlich sein. Wie die Figur 3 zeigt, ist der Expansionskörper 4 im Bereich der sich bildenden Naht 25 angeordnet. In diesem Bereich wird somit mit dem Expansionskörper 24 das Innenrohr 4 an das Metallrohr 9 angepresst. Durch dieses flächige Anpressen wird verhindert, dass in diesem Bereich sich zwischen dem Innenrohr 4 und dem Metallrohr 9 Lufteinschlüsse bilden können. Solche Lufteinschlüsse sind unerwünscht und können zu einer Ablösung des Innenrohres 4 vom Metallrohr 9 führen.

Im Bereich der Erwärmungsstation 10 ist vorzugsweise ein weiterer Expansionskörper 24' angeordnet. Da in dieser Station 10 das Kunststoffinnenrohr 4 erreicht wird, ist die Gefahr einer Faltenbildung im Kunststoff innenrohr 4 besonders gross. Der Expansionskörper 24' stützt das Kunststoffinnenrohr 4 und verhindert dadurch eine Faltenbildung wirksam. Sind in der Vorrichtung 1 bzw. 1' mehrere Expansionskörper vorgesehen, so können diese auch unterschiedlich sein, das heisst ein Expansionskörper kann gemäss Figur 5 und ein anderer Expansionskörper gemäss Figur 6 ausgebildet sein. Es sind hier selbstverständlich auch andere Expansionskörper denkbar, die federelastisch eine radiale Kraft ausüben oder sonstwie einen radialen Druck ergeben und eine geringe Reibungskraft in Längsrichtung des Rohres ausüben. Der geeignete radiale Druck ist unterschiedlich und ist beispielsweise von der Schichtdicke des Innenrohres 4 und vom verwendeten Kunststoffmaterial sowie auch vom Durchmesser des herzustellenden Verbundrohres 14 abhängig.

## Patentansprüche

1. Vorrichtung zum kontinuierlichen Herstellen eines Verbundrohres (14), wobei ein Metallrohr (9) aus einem Bandmaterial (5) durch Einrollen und Längsverschweissen über einem Kunststoffinnenrohr (4) gebildet wird, mit einer Formstation (7), bei welcher das Bandmaterial (5) eingerollt wird, einer Längsschweissstation (8), bei welcher das eingerollte Bandmaterial (5) geschweisst wird und mit Mitteln zum Verbinden des Kunststoffinnenrohres (4) mit dem Metallrohr (9), **dadurch gekennzeichnet, dass** die Mittel zum Verbinden des Kunststoffinnenrohres (4) mit dem Metallrohr (9) wenigstens einen Expansionskörper (21, 24) aufweisen, der schwimmend im Innern des sich bildenden Rohres gelagert ist und der das Kunststoffinnenrohr (4) radial nach aussen an die Innenseite des Metallrohres (9) anpresst.

2. Vorrichtung nach Anspruch 1, **dadurch gekennzeichnet, dass** der Expansionskörper (21, 24) im Bereich der genannten Formstation (7) angeordnet ist.

3. Vorrichtung nach Anspruch 1 oder 2, **dadurch gekennzeichnet, dass** in Strömungsrichtung (11) nach der Schweissstation (8) eine Erwärmungsstation (10) angeordnet ist und dass im Bereich dieser Erwärmungsstation (10) ein weiterer Expansionskörper (22, 24') angeordnet ist.

4. Vorrichtung nach einem der Ansprüche 1-3, **dadurch gekennzeichnet, dass** der Expansionskörper (21, 24) zu seiner Verankerung mit einer rückseitig angeordneten Magnethalterung (16) verbunden ist.

5. Vorrichtung nach einem Ansprüche 1-4, **dadurch gekennzeichnet, dass** der Expansionskörper (21) federelastische Elemente (28) aufweist, die einen federnden radialen Druck auf die Innenseite des Kunststoffrohres (4) ausüben.

6. Vorrichtung nach einem der Ansprüche 1-5, **dadurch gekennzeichnet, dass** der Expansionskörper (21) wenigstens bereichsweise trichterförmig ausgebildet ist.

7. Vorrichtung nach einem der Ansprüche 1-6, **dadurch gekennzeichnet, dass** der Expansionskörper (24) walzenförmig ausgebildet ist.

8. Vorrichtung nach einem der Ansprüche 1-5, **dadurch gekennzeichnet, dass** der Expansionskörper (24) als Druckelement und insbesondere als Ballon ausgebildet ist.

9. Verfahren zum kontinuierlichen Herstellen eines Verbundrohres (14), wobei ein Metallrohr (9) über einem Kunststoffinnenrohr (4) aus einem Bandmaterial (5) durch Einrollen und Längsverschweissen gebildet wird und wobei das Kunststoffinnenrohr (4) mit dem Metallrohr (9) verbunden wird, **dadurch gekennzeichnet, dass** zum Verbinden des Kunststoffinnenrohres (4) mit dem Metallrohr (9) das Kunststoffinnenrohr (4) mittels eines schwimmend gelagerten Expansionskörpers (21, 24) radial an die Innenseite des Metallrohres (9) angepresst wird.

10. Verfahren nach Anspruch 9, **dadurch gekennzeichnet, dass** das Kunststoffinnenrohr (4) federelastisch an das Metallrohr (9) angepresst wird.

11. Verfahren nach Anspruch 10, **dadurch gekennzeichnet, dass** das Kunststoffinnenrohr (4) im Bereich einer Formstation (7) an das Metallrohr angepresst wird.

12. Verfahren nach einem der Ansprüche 9-11, **dadurch gekennzeichnet, dass** in Strömungsrichtung (11) nach dem Längsverschweissen das Rohr in einer Erwärmungsstation (10) erwärmt wird und dass im Bereich dieser Erwärmungsstation (10) das Kunststoffinnenrohr (4) mittels eines Expansionskörpers (21, 24) radial an die Innenseite des Metallrohres (9) angepresst wird.

13. Verfahren nach Anspruch 12, **dadurch gekennzeichnet, dass** in Strömungsrichtung nach der Erwärmungsstation (10) eine Kühlstation (15) angeordnet ist und dass das Kunststoffinnenrohr (4) im Bereich dieser Kühlstation (15) radial nach aussen an das Metallrohr (9) angepresst wird.

14. Verfahren nach einem der Ansprüche 9-13, **dadurch gekennzeichnet, dass** das Kunststoffinnenrohr (4) in mehreren nacheinander angeordneten Bereichen radial nach aussen an das Metallrohr (9) angepresst wird.

15. Verfahren nach einem der Ansprüche 9-14, **dadurch gekennzeichnet, dass** der Expansionskörper (21, 24) verschiebbar ist.

## Claims

1. System for continuously producing a composite tube (14), in which a metal tube (9) is formed from a strip of material (5) by rolling and longitudinally welding it around a plastic inner tube (4), having a forming station (7) where the strip material (5) is rolled, a longitudinal welding station (8) where the rolled strip material (5) is welded, and having means for joining the plastic inner tube (4) to the metal tube, **characterised in that** the means for joining the plastic inner tube (4) to the metal tube (9) incorporate at least one expanding body (21, 24) which is mounted so as to float in the interior of the tube as it is being formed and which presses the plastic inner tube (4) radially outwards against the internal face of the metal tube (9).

2. System as claimed in claim 1, **characterised in that** the expanding body (21, 24) is disposed in the region of said forming station (7).

3. System as claimed in claim 1 or 2, **characterised in that** a heating station (10) is disposed after the welding station (8) in the direction of flow (11) and another expanding body (22, 24') is disposed in the region of this heating station (10).

4. System as claimed in one of claims 1-3, **characterised in that** the expanding body (21, 24) is attached to its anchoring with a magnetic holder (16) disposed at its rear face.

5. System as claimed in one of claims 1-4, **characterised in that** the expanding body (21) has resilient elements (28), which exert a resilient radial pressure on the internal face of the plastic tube (4).

6. System as claimed in one of claims 1-5, **characterised in that** the expanding body (21) is of a funnel-shaped design, at least in certain regions.

7. System as claimed in one of claims 1-6, **characterised in that** the expanding body (24) is of a roller-shaped design.

8. System as claimed in one of claims 1-5, **characterised in that** the expanding body (24) is a pressure element and in particular is provided in the form of a balloon.

9. Method of continuously producing a composite tube (14), whereby a metal tube (9) is formed from a strip of material (5) by rolling and longitudinally welding it around a plastic inner tube (4), and whereby the plastic inner tube (4) is joined to the metal tube (9), **characterised in that** in order to join the plastic inner tube (4) to the metal tube (9), the plastic inner tube (4) is pressed radially against the internal face of the metal tube (9) by means of an expanding body (21, 24) mounted in a floating arrangement.

10. Method as claimed in claim 9, **characterised in that** the plastic inner tube (4) is resiliently pressed against the metal tube (9).

11. Method as claimed in claim 10, **characterised in that** the plastic inner tube (4) is pressed against the metal tube in the region of a forming station (7).

12. Method as claimed in one of claims 9-11, **characterised in that**, in the direction of flow (11), after the longitudinal welding, the tube is heated in a heating station (10) and the plastic inner tube (4) is pressed radially against the internal face of the metal tube (9) by means of an expanding body (21, 24) in the region of this heating station (10).

13. Method as claimed in claim 12, **characterised in that**, in the direction of flow, a cooling station (15) is provided after the heating station (10) and the plastic inner tube (4) is pressed radially outwards against the metal tube (9) in the region of this cooling station (15).

14. Method as claimed in one of claims 9-13, **characterised in that** the plastic inner tube (4) is pressed radially outwards against the metal tube (9) in several consecutive regions.

15. Method as claimed in one of claims 9-14, **characterised in that** the expanding body (21, 24) is displaceable.

## Revendications

1. Dispositif pour la fabrication en continu d'un tuyau de matière composite (14), dans lequel on forme un tuyau métallique (9) à partir d'un feuillard (5) en l'enroulant et en le soudant dans le sens de la longueur sur un tuyau interne de matière plastique (4), comprenant un poste de formage (7) où l'on enroule le feuillard (5), un poste de soudage longitudinal (8) où l'on soude le feuillard enroulé (5) et des moyens de placage du tuyau interne de matière plastique (4) contre le tuyau métallique (9), **caractérisé en ce que** les moyens de placage du tuyau interne de matière plastique (4) contre le tuyau métallique (9) présentent au moins un corps expansible (21, 24) qui est disposé de manière flottante à l'intérieur du tuyau en cours de formation et qui exerce une pression radiale vers l'extérieur sur la paroi interne du tuyau métallique (9).

2. Dispositif selon la revendication 1, **caractérisé en ce que** le corps expansible (21, 24) est disposé au niveau dudit poste de formage (7).

3. Dispositif selon la revendication 1 ou 2, **caractérisé en ce qu'**un poste de chauffage (10) est disposé en aval du poste de soudage (8) dans le sens d'avancement (11) et qu'un autre corps expansible (22, 24') est disposé au niveau dudit poste de chauffage (10).

4. Dispositif selon l'une quelconque des revendications 1 à 3, **caractérisé en ce que** le corps expansible (21, 24) est relié, en vue de sa fixation, à un dispositif de fixation magnétique (16) disposé en amont.

5. Dispositif selon l'une quelconque des revendications 1 à 4, **caractérisé en ce que** le corps expansible (21) possède des éléments élastiques (28) qui exercent une pression élastique et radiale sur la paroi interne du tuyau de matière plastique (4).

6. Dispositif selon l'une quelconque des revendications 1 à 5, **caractérisé en ce que** le corps expansible (21) se présente, au moins par endroits, sous la forme d'un entonnoir.

7. Dispositif selon l'une quelconque des revendications 1 à 6, **caractérisé en ce que** le corps expansible (24) se présente sous la forme d'un cylindre.

8. Dispositif selon l'une quelconque des revendications 1 à 5, **caractérisé en ce que** le corps expansible (24) se présente sous la forme d'un élément de pression et en particulier sous la forme d'un ballon.

9. Procédé pour la fabrication en continu d'un tuyau de matière composite (14), dans lequel on forme un tuyau métallique (9) en enroulant et en soudant dans le sens de la longueur un feuillard (5) sur un tuyau interne de matière plastique (4) et dans lequel on plaque le tuyau interne de matière plastique (4) contre le tuyau métallique (9), **caractérisé en ce que** l'on presse, en vue du placage du tuyau interne de matière plastique (4) contre le tuyau métallique (9), le tuyau interne de matière plastique (4) au moyen d'un corps expansible (21, 24) disposé de manière flottante radialement contre la paroi interne du tuyau métallique (9).

10. Procédé selon la revendication 9, **caractérisé en ce que** l'on presse le tuyau interne de matière plastique (4) de façon élastique contre le tuyau métallique (9) .

11. Procédé selon la revendication 10, **caractérisé en ce que** l'on presse, au niveau d'un poste de formage (7), le tuyau interne de matière plastique (4) contre le tuyau métallique.

12. Procédé selon l'une quelconque des revendications 9 à 11, **caractérisé en ce que** l'on chauffe, après le soudage longitudinal, le tuyau dans le sens d'avancement (11) dans un poste de chauffage (10) et **en ce que** l'on presse, au niveau de ce poste chauffage (10), le tuyau interne de matière plastique (4) radialement contre la paroi interne du tuyau métallique (9) au moyen d'un corps expansible (21, 24).

13. Procédé selon la revendication 12, **caractérisé en ce que** l'on dispose, dans le sens d'avancement, un poste de refroidissement (15) en aval du poste de chauffage (10) et que l'on presse le tuyau interne de matière plastique (4) au niveau de ce poste de refroidissement (15) radialement vers l'extérieur contre le tuyau métallique (9).

14. Procédé selon l'une quelconque des revendications 9 à 13, **caractérisé en ce que** l'on presse, dans plusieurs endroits disposés les uns après les autres, le tuyau interne de matière plastique (4) radialement vers l'extérieur contre le tuyau métallique (9).

15. Procédé selon l'une quelconque des revendications 9 à 14, caractérisé en ce le corps expansible (21, 24) est réalisé de manière à pouvoir coulisser.
